# FASCICULE DE BREVET EUROPEEN

(11) **EP 2 124 689 B1**
(45) Date de publication et mention de la délivrance du brevet: **15.08.2012**
(21) Numéro de dépôt: 08761853.4
(22) Date de dépôt: 08.02.2008
(51) Int. Cl.: A47J 43/07

(54) **DISPOSITIF POUR LA PRODUCTION DE GLACE CONCASSÉE MUNI D'UN FILTRE**
VORRICHTUNG MIT EINEM FILTER ZUR HERSTELLUNG VON ZERSTOSSENEM EIS
DEVICE FOR PRODUCING CRUSHED ICE FITTED WITH A FILTER

(30) Priorité: 22.02.2007 FR 0701266
(43) Date de publication de la demande: 02.12.2009
(73) Titulaire: SEB S.A., 69130 Ecully (FR)
(72) Inventeur: HERBERT, Philippe, 50290 Saint-Martin-de-Bréhal (FR)
(74) Mandataire: Kiehl, Hubert
(86) Numéro de dépôt international: PCT/FR2008/000150
(87) Numéro de publication internationale: WO 2008/113910

(56) Documents cités:
- DE-A1- 19 631 679
- US-B2- 6 676 051

## Description

La présente invention concerne le domaine technique général des mixeurs ménagers du type plongeant et se rapporte plus particulièrement à un filtre pour la production de glace concassée, ou glace pilée, au moyen d'un mixer plongeant.

Il est connu, du brevet US 6 676 051, un appareil pour la production de glace concassée destiné à être utilisé avec un boîtier moteur de batteur. Un tel appareil comporte un récipient dans lequel est introduit un filtre dont le fond supporte un axe de guidage sur lequel vient s'emmancher un outil rotatif, le récipient étant fermé par un couvercle qui est muni d'une ouverture centrale permettant le passage de l'extrémité supérieure de l'outil rotatif et son accouplement avec le boîtier moteur du batteur.

Un tel dispositif présente cependant l'inconvénient de ne pas être adapté pour une utilisation avec un mixeur plongeant. De plus, un tel dispositif, dans lequel l'outil est guidé par un axe porté par le filtre, présente l'inconvénient d'être relativement coûteux à réaliser, le filtre devant posséder une grande rigidité pour assurer le guidage de l'outil.

L'invention qui suit vise à pallier ces inconvénients en proposant un dispositif pour la production de glace concassée, de type glace pilée, au moyen d'un mixeur plongeant qui soit simple et économique à réaliser et qui permette l'obtention aisée de glace concassée.

Le but de l'invention est atteint par un dispositif pour la production de glace concassée comme défini dans la revendication 1.

Selon une autre caractéristique de l'invention, l'élément en saillie présente une extrémité pointue.

Selon une autre caractéristique de l'invention, les ouvertures s'étendent sur la paroi latérale du filtre sur une hauteur supérieure à 2 cm en partant de l'extrémité inférieure du filtre.

Selon une autre caractéristique de l'invention, les ouvertures calibrées comprennent des fentes s'étendant radialement sur le fond du filtre et se prolongeant sur la paroi latérale du filtre.

Selon encore une autre caractéristique de l'invention, le filtre présente une hauteur supérieure à 10 cm.

Selon encore une autre caractéristique de l'invention, le filtre comporte un évasement à son extrémité supérieure formant une collerette destinée à venir en appui sur le bord supérieur d'un récipient.

Selon encore une autre caractéristique de l'invention, le filtre est réalisé en matière plastique.

Selon une autre caractéristique de l'invention, la différence de diamètre entre la partie inférieure du filtre et la cloche de protection est inférieure à 20 mm.

Selon encore une autre caractéristique de l'invention, le dispositif comporte un récipient pour recueillir la glace concassée dans lequel vient s'insérer le filtre.

Selon une autre caractéristique de l'invention, le filtre comporte une collerette à son extrémité supérieure qui vient reposer en bordure de l'extrémité supérieure du récipient, ce dernier présentant une hauteur supérieure à la hauteur du filtre.

On comprendra mieux les buts, aspects et avantages de la présente invention, d'après la description donnée ci-après d'un mode particulier de réalisation de l'invention, présenté à titre d'exemple non limitatif, en se référant aux dessins annexés dans lesquels :
- la figure 1 est une vue en perspective du mixeur plongeant au dessus d'un filtre pour la production de glace concassée selon un mode particulier de réalisation de l'invention ;
- la figure 2 est une autre vue en perspective du mixeur plongeant et du filtre de la figure 1,
- la figure 3 est une vue de côté du filtre utilisé pour la production de la glace concassée au moyen du mixeur plongeant, le filtre étant utilisé en association avec un récipient de récupération de glace concassée.

Seuls les éléments nécessaires à la compréhension de l'invention ont été représentés. Pour faciliter la lecture des dessins les mêmes éléments portent les mêmes références d'une figure à l'autre.

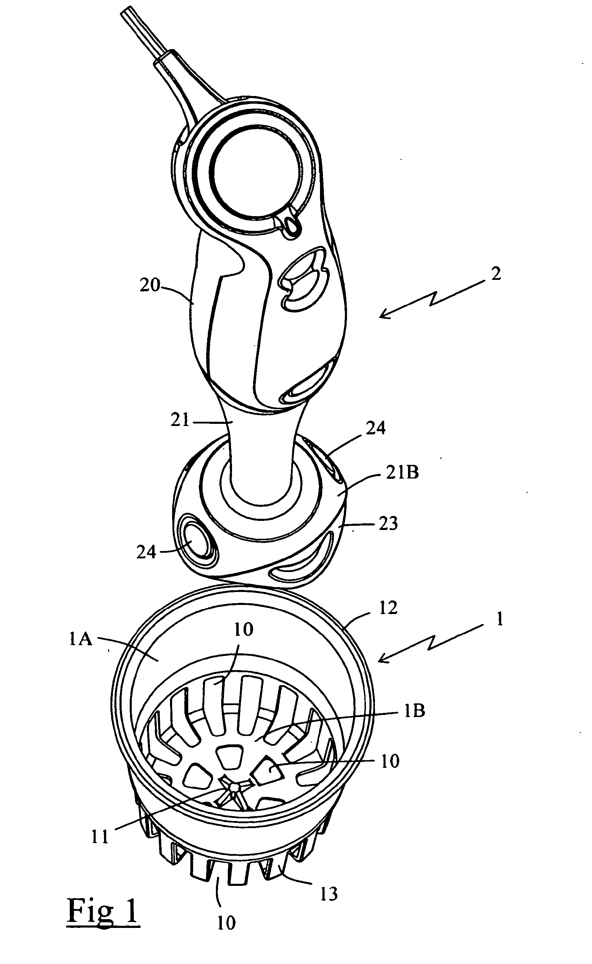

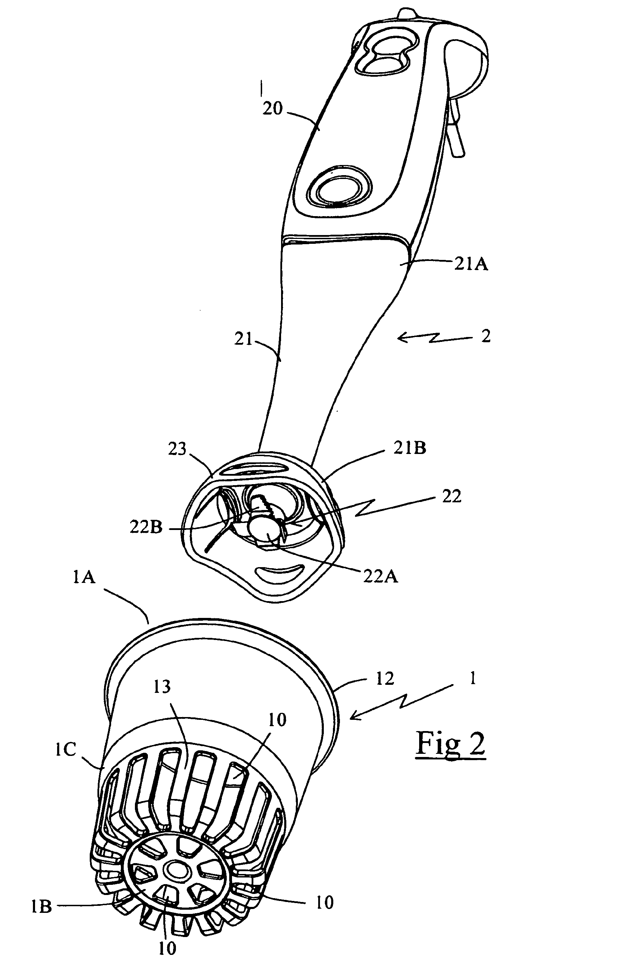

Les figures 1 et 2 représentent un filtre 1 destiné être utilisé avec un mixeur plongeant 2 pour la production de glace concassée, ou glace pilée, à partir de glaçons obtenus classiquement dans un bac à glaçons d'un réfrigérateur.

Le mixeur plongeant 2 comporte, de manière connue en soi, un boîtier moteur 20 accouplé à un pied de mixage 21, ce dernier présentant la forme d'un fût tubulaire, réalisé avantageusement en acier inox ou en matière plastique, et comportant une extrémité supérieure d'accouplement 21A évasée assurant le montage amovible du pied de mixage 21 sur le boîtier moteur 20.

La partie inférieure du pied de mixage 21 comporte une cloche de protection 21B présentant un diamètre extérieur de l'ordre de 7 cm, cette cloche de protection 21 B renfermant un outil de travail 22 entraîné en rotation par le boîtier moteur 20, l'outil de travail 22 comportant un moyeu central 22A supportant des couteaux 22B avantageusement munis de dents sur leur bord d'attaque pour favoriser l'éclatement de la glace.

L'outil de travail 22 est solidaire d'une coupelle de préhension 23 assurant une protection périphérique des couteaux 22B et permettant de manipuler l'outil de travail 22 sans toucher à ses parties coupantes, l'outil de travail 22 étant monté rotatif par rapport à la coupelle de préhension 23.

Un tel outil de travail 22 et les moyens utilisés pour assurer sa fixation sur la cloche de protection 21 B sont en tous points semblables à ceux décrits, en détail, dans la demande de brevet FR 05 10120 déposée par la demanderesse. En particulier, la cloche de préhension 23 est immobilisée dans la cloche de protection 21 B par deux bossages élastiques 24 venant s'engager dans des ouvertures adaptées de la cloche de protection 21B.

Plus particulièrement selon l'invention, le filtre 1, destiné à être utilisé avec le mixeur plongeant 2, comporte un corps allongé, présentant la forme d'un gobelet plus haut que large dont l'extrémité supérieure ouverte 1 A permet l'introduction de glaçons et du pied de mixage 21.

L'extrémité inférieure du filtre 1 est fermée par un fond 1B ajouré comprenant de multiples ouvertures calibrées 10 permettant le passage des morceaux de glace de faible dimension et la rétention des glaçons non broyés lorsque ces derniers présentent une largeur supérieure à la largeur des ouvertures 10.

Les multiples ouvertures 10 comprennent avantageusement des ouvertures de forme trapézoïdale, réparties angulairement autour du centre du fond 1 B du filtre et des ouvertures en forme de fentes s'étendant radialement à la périphérie du fond 1B du filtre, ces fentes se prolongeant sur la paroi latérale du filtre 1 de sorte que les petits morceaux de glace sont naturellement évacués au travers des fentes de la paroi latérale lorsqu'ils sont projetés radialement par la rotation de l'outil de travail 22. A titre d'exemple, les fentes présentent une largeur de l'ordre de 8 mm et s'étendent verticalement sur la paroi latérale du filtre 1 sur une hauteur préférentiellement supérieure à 2 cm et avantageusement de l'ordre de 4 cm.

Le filtre 1 muni de telles ouvertures 10 présente l'avantage de comporter, entre chaque ouverture 10, de nombreux tirants 13 verticaux d'une épaisseur de l'ordre de 2 mm et d'une largeur de l'ordre de 7 mm, qui sont adaptés pour supporter la charge exercée par le pied de mixage 21 lors l'utilisateur vient appliquer ce dernier contre les glaçons.

Afin d'éviter le positionnement d'un glaçon au centre du filtre 1 et éviter que ce dernier ne soit entraîné en rotation par le moyeu 22A de l'outil de travail sans être attaqué par les couteaux 22B, le fond du filtre 1 est préférentiellement muni d'un élément pointu 11, formé ici par deux croisillons triangulaires, faisant saillie au centre du filtre 1 sur une hauteur de l'ordre de 7 mm.

De manière avantageuse, la largeur du filtre 1 est légèrement plus grande que le diamètre de la cloche de protection 21B du pied de mixage, la différence de diamètre entre la partie inférieure du filtre 1 et la cloche de protection 21B étant préférentiellement inférieure à 20 mm, de sorte que le pied de mixage 21 est guidé sensiblement axialement dans le filtre 1 lorsqu'il est introduit dans ce dernier.

Dans l'exemple illustré aux figures 1 à 3, le filtre 1 possède une section transversale circulaire dont le diamètre diminue progressivement du sommet 1 A au fond 1B du filtre avec une restriction de section 1C plus marquée juste au dessus des ouvertures 10. Le filtre 1 comporte un évasement à son extrémité supérieure 1 A définissant une collerette 12 formant une butée facilitant notamment la manipulation du filtre, le filtre 1 présentant un diamètre de l'ordre de 9 cm en dessous de la collerette 12 et de l'ordre de 8 cm au niveau du fond 1 B.

De manière préférentielle, le filtre 1 présente une hauteur supérieure à 10 cm afin de permettre le traitement d'un volume important de glace tout en évitant la projection de glace concassée par l'extrémité ouverte 1 A du filtre. A titre d'exemple la hauteur du filtre est de l'ordre de 11 cm.

Un tel filtre présente l'avantage de pouvoir être facilement réalisé en matière plastique, par exemple par moulage, en présentant avantageusement une épaisseur de l'ordre de 2 mm.

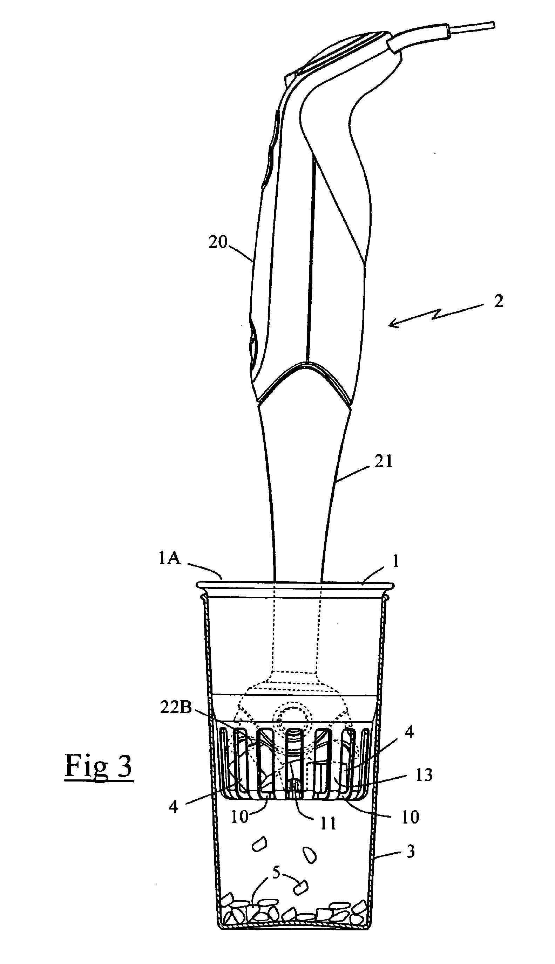

La figure 3 illustre l'utilisation du filtre 1 pour la production de glace concassée au moyen du mixeur plongeant 2, le filtre 1 étant ici associé à un récipient 3 de récupération de la glace.

Conformément à cette figure, le filtre 1 est placé dans le récipient 3 de récupération de la glace concassée, représenté en coupe sur cette figure, le récipient 3 présentant une hauteur largement supérieure à la hauteur du filtre 1 et une largeur adaptée pour que la partie supérieure du filtre 1 vienne épouser le diamètre intérieur du récipient 3 et que la collerette 12 du filtre vienne reposer au dessus du bord du récipient 3 lorsqu'il est inséré dans ce dernier.

Lorsque l'utilisateur souhaite produire de la glace concassée, il introduit des glaçons 4, par exemple de forme cubique de 20 mm de côté, sur une ou deux couches à l'intérieur du filtre 1, puis vient broyer ces glaçons 4 au moyen de l'outil de travail 22 du mixeur plongeant 2 en introduisant le pied de mixage 21 par l'ouverture 1 A du filtre et en descendant progressivement l'outil de travail 22 en rotation au contact des glaçons 4. Lors de cette opération, les morceaux de glace concassée 5 sont progressivement évacués par les ouvertures 10 du filtre vers le fond du récipient 3 lorsque leur taille est suffisamment faible pour permettre leur passage au travers des ouvertures 10.

La hauteur importante des ouvertures 10 s'étendant verticalement sur la paroi latérale du filtre 1 présente alors l'avantage de permettre une évacuation immédiate des morceaux de glace 5 concassée, ces derniers étant projetés radialement, à hauteur des ouvertures 10, contre la paroi latérale du filtre 1 par la force centrifuge générée par la rotation de l'outil de travail 22 lors de l'entrée en contact de l'outil de travail 22 rotatif sur le sommet des glaçons 4.

Lors de cette opération de broyage des glaçons 4, l'efficacité maximale de broyage de l'outil de travail 22 est garantie par la présence de l'élément 11 faisant saillie au centre du fond du filtre 1 qui repousse les glaçons radialement, c'est à dire dans la zone d'attaque des couteaux 22B de l'outil et empêche ainsi qu'un glaçon 4 ne vienne se centrer sous le moyeu de l'outil 22A et bloque ainsi le mouvement de descente de l'outil 22 vers le fond du filtre 1.

La glace pilée ainsi obtenue présente l'avantage de permettre un refroidissement rapide d'une boisson, la surface d'échange thermique étant rendue très importante par le concassage de la glace en petits morceaux.

Bien entendu, l'invention n'est nullement limitée au mode de réalisation décrit et illustré qui n'a été donné qu'à titre d'exemple. Des modifications restent possibles, notamment du point de vue de la constitution des divers éléments ou par substitution d'équivalents techniques, sans sortir pour autant du domaine de protection de l'invention.

Ainsi, dans une variante de réalisation non représentée, la forme de l'élément en saillie au fond du filtre pourra varier et présenter par exemple une forme conique.

Ainsi, dans une autre variante de réalisation représentée, le filtre pourra être réalisé en métal.

## Revendications

1. Dispositif pour la production de glace concassée comprenant un filtre (1) comportant une ouverture à son extrémité supérieure permettant l'introduction successive de glaçons (4) et d'un mixeur plongeant (2), et une partie inférieure munie d'ouvertures calibrées (10) permettant l'évacuation progressive de la glace concassée, ledit filtre (1) comportant un élément (11) faisant saillie au fond (1B) du filtre afin d'empêcher le positionnement d'un glaçon (4) au centre du fond (1B) du filtre à glaçon, **caractérisé en ce qu'**il comporte un mixeur plongeant (2) comprenant un pied de mixage (21) muni d'une cloche de protection (23) renfermant un outil de travail (22) entraîné en rotation par un moteur, et **en ce que** ledit filtre (1) présente la forme d'un gobelet, plus haut que large, le diamètre du filtre (1) étant légèrement supérieur au diamètre extérieur de la cloche de protection (23) du pied de mixage (21) de sorte que le pied de mixage (21) est guidé axialement par la paroi du filtre (1) lorsque l'utilisateur applique l'outil de travail (22) contre les glaçons (4) en descendant progressivement le pied de mixage (21) au centre du filtre (1).

2. Dispositif pour la production de glace concassée selon la revendication 1, **caractérisé en ce que** l'élément en saillie (11) présente une extrémité pointue.

3. Dispositif pour la production de glace concassée selon l'une quelconque des revendications 1 à 2, **caractérisé en ce que** lesdites ouvertures (10) s'étendent sur la paroi latérale du filtre (1) sur une hauteur supérieure à 2 cm en partant de l'extrémité inférieure du filtre.

4. Dispositif pour la production de glace concassée selon l'une quelconque des revendications 1 à 3, **caractérisé en ce que** lesdites ouvertures calibrées (10) comprennent des fentes s'étendant radialement sur le fond (1 B) du filtre et se prolongeant sur la paroi latérale du filtre (1).

5. Dispositif pour la production de glace concassée selon l'une quelconque des revendications 1 à 4, **caractérisé en ce qu'**il présente une hauteur supérieure à 10 cm.

6. Dispositif pour la production de glace concassée selon l'une quelconque des revendications 1 à 5, **caractérisé en ce qu'**il comporte un évasement à son extrémité supérieure formant une collerette (12) destinée à venir en appui sur le bord supérieur d'un récipient (3).

7. Dispositif pour la production de glace concassée selon l'une quelconque des revendications 1 à 6, **caractérisé en ce qu'**il est réalisé en matière plastique.

8. Dispositif pour la production de glace concassée selon l'une quelconque des revendications 1 à 7, **caractérisé en ce que** la différence de diamètre entre la partie inférieure du filtre (1) et la cloche de protection (23) est inférieure à 20 mm.

9. Dispositif pour la production de glace concassée selon l'une quelconque des revendications 1 à 8, **caractérisé en ce qu'**il comporte un récipient (3) pour recueillir la glace concassée dans lequel vient s'insérer ledit filtre (1).

10. Dispositif pour la production de glace concassée selon la revendication 9, **caractérisé en ce que** le filtre (1) comporte une collerette (12) à son extrémité supérieure qui vient reposer en bordure de l'extrémité supérieure du récipient (3), ce dernier présentant une hauteur supérieure à la hauteur du filtre (1).

## Claims

1. A device for making crushed ice comprising a filter (1) containing an opening at the upper end thereof for successively inserting ice cubes (4) and a hand blender (2), and a lower portion provided with calibrated openings (10) for the progressive discharge of crushed ice, said filter (1) containing a member (11) protruding at the bottom (1 B) of the filter in order to prevent the positioning of an ice cube (4) at the centre of the bottom (1 B) of the ice cube filter, **characterised in that** it contains a hand blender (2) comprising a blender foot (21) provided with a protective cover (23) containing a working tool (22) driven in rotation by a motor, and **in that** said filter (1) has the shape of a cup, taller than wide, the diameter of the filter (1) being slightly greater than the outside diameter of the protective cover (23) of the blender foot (21) such that the blender foot (21) is guided axially by the walls of the filter (1) when the user applies the working tool (22) against the ice cubes (4) by gradually lowering the blender foot (21) to the centre of the filter (1).

2. A device for making crushed ice according to claim 1, **characterised in that** the protruding member (11) has a pointed end.

3. A device for making crushed ice according to any one of claims 1 to 2, **characterised in that** said openings (10) extend up the side walls of the filter (1) over a height of more than 2 cm starting from the lower end of the filter.

4. A device for making crushed ice according to any one of claims 1 to 3, **characterised in that** said calibrated openings (10) include slots radially extending on the bottom (1 B) of the filter and extending up the side walls of the filter (1).

5. A device for making crushed ice according to any one of claims 1 to 4, **characterised in that** it is more than 10 cm high.

6. A device for making crushed ice according to any one of claims 1 to 5, **characterised in that** it comprises a flare at its upper end forming a rim (12) which comes to rest on the upper edge of a vessel (3).

7. A device for making crushed ice according to any one of claims 1 to 6, **characterised in that** it is made of plastic.

8. A device for making crushed ice according to any one of claims 1 to 7, **characterised in that** the difference in diameter between the lower portion of the filter (1) and the protective cover (23) is less than 20 mm.

9. A device for making crushed ice according to any one of claims 1 to 8, **characterised in that** it contains a vessel (3) for collecting the crushed ice and into which said filter (1) is inserted.

10. A device for making crushed ice according to claim 9, **characterised in that** the filter (1) comprises a rim (12) at its upper end which comes to rest on the edge of the upper end of the vessel (3), the vessel being taller than the filter (1).

## Patentansprüche

1. Vorrichtung zur Herstellung von zerstoßenem Eis, umfassend einen Filter (1), der eine Öffnung an seinem oberen Ende zum schrittweisen Einfügen von Eiswürfeln (4) und einem Stabmixer (2) und einen unteren Teil umfasst, der mit kalibrierten Öffnungen (10) zum allmählichen Abführen des zerstoßenen Eises versehen ist, wobei der Filter (1) ein Element (11) umfasst, das am Boden (1 B) des Filters vorragt, um das Anordnen eines Eiswürfels (4) in der Mitte des Bodens (1 B) des Eisfilters zu verhindern, **dadurch gekennzeichnet, dass** sie einen Stabmixer (2) umfasst, der einen Mixstab (21) umfasst, der mit einer Schutzglocke (23) versehen ist, die ein Arbeitswerkzeug (22) einschließt, das von einem Motor in Drehung versetzt wird, und dadurch, dass der Filter (1) die Form eines Bechers aufweist, der höher als breit ist, wobei der Durchmesser des Filters (1) leicht größer ist als der Außendurchmesser der Schutzglocke (23) des Mixstabs (21), so dass der Mixstab (21) axial von der Wand des Filters (1) geführt wird, wenn der Benutzer das Arbeitswerkzeug (22) gegen die Eiswürfel (4) durch allmähliches Absenken des Mixstabs (21) zur Mitte des Filters (1) hin drückt.

2. Vorrichtung zur Herstellung von zerstoßenem Eis nach Anspruch 1, **dadurch gekennzeichnet, dass** das vorragende Element (11) ein spitzes Ende aufweist.

3. Vorrichtung zur Herstellung von zerstoßenem Eis nach einem der Ansprüche 1 bis 2, **dadurch gekennzeichnet, dass** sich die Öffnungen (10) auf der Seitenwand des Filters (1) über eine Höhe von mehr als 2 cm ausgehend vom unteren Ende des Filters erstrecken.

4. Vorrichtung zur Herstellung von zerstoßenem Eis nach einem der Ansprüche 1 bis 3, **dadurch gekennzeichnet, dass** die kalibrierten Öffnungen (10) Schlitze umfassen, die sich radial am Boden (1 B) des Filters erstrecken und sich auf der Seitenwand des Filters (1) verlängern.

5. Vorrichtung zur Herstellung von zerstoßenem Eis nach einem der Ansprüche 1 bis 4, **dadurch gekennzeichnet, dass** sie eine Höhe von mehr als 10 cm aufweist.

6. Vorrichtung zur Herstellung von zerstoßenem Eis nach einem der Ansprüche 1 bis 5, **dadurch gekennzeichnet, dass** sie an ihrem oberen Ende eine Erweiterung umfasst, die einen Kragen (12) bildet, der auf dem oberen Rand eines Behälters (3) aufliegen soll.

7. Vorrichtung zur Herstellung von zerstoßenem Eis nach einem der Ansprüche 1 bis 6, **dadurch gekennzeichnet, dass** sie aus Kunststoffmaterial hergestellt ist.

8. Vorrichtung zur Herstellung von zerstoßenem Eis nach einem der Ansprüche 1 bis 7, **dadurch gekennzeichnet, dass** die Differenz des Durchmessers zwischen dem unteren Teil des Filters (1) und der Schutzglocke (23) weniger als 20 mm beträgt.

9. Vorrichtung zur Herstellung von zerstoßenem Eis nach einem der Ansprüche 1 bis 8, **dadurch gekennzeichnet, dass** sie einen Behälter (3) zum Sammeln des zerstoßenen Eises umfasst, in den der Filter (1) eingesetzt wird.

10. Vorrichtung zur Herstellung von zerstoßenem Eis nach Anspruch 9, **dadurch gekennzeichnet, dass** der Filter (1) an seinem oberen Ende einen Kragen (12) umfasst, der auf dem Rand des oberen Endes des Behälters (3) aufliegt, wobei Letzterer eine Höhe aufweist, die größer ist als die Höhe des Filters (1).
